# EUROPÄISCHE PATENTSCHRIFT

(11) **EP 0 780 823 B1**
(45) Veröffentlichungstag und Bekanntmachung des Hinweises auf die Patenterteilung: **28.02.2001**
(21) Anmeldenummer: 96117571.8
(22) Anmeldetag: 02.11.1996
(51) Int. Cl.: G08G 1/0968

(54) **Beleuchtungsvorrichtung für Fahrzeuge**
Headlight apparatus for vehicles
Système d'éclairage pour véhicules

(30) Priorität: 22.12.1995 DE 19548487
(43) Veröffentlichungstag der Anmeldung: 25.06.1997
(73) Patentinhaber: Bayerische Motoren Werke Aktiengesellschaft, 80788 München (DE)
(72) Erfinder: Huber, Josef-Peter, 80797 München (DE); Huhn, Wolfgang, 85247 Schwabhausen (DE); Löwenau, Jan, Dr., 82547 Eurasburg (DE)

(56) Entgegenhaltungen:
- US-A- 5 247 440

## Beschreibung

Die Erfindung bezieht sich auf eine Beleuchtungsvorrichtung mit den Merkmalen des Oberbegriffs vom Patentanspruch 1.

Eine ähnliche Belenchtungsvorrichtung ist beispielsweise aus der US-A-5 247 440 bekannt.

Es ist eine Beleuchtungsvorrichtung unter der Bezeichnung Kurvenscheinwerfer seit langem bekannt, bei der vorzugsweise die beiden Frontscheinwerfer des Fahrzeugs abhängig von der Lenkrad-Einstellung ausgerichtet werden. Es ist dabei nicht möglich, vor Beginn einer Kurvenfahrt bereits die Scheinwerfer in die richtige Richtung zu verschwenken. Auch ist der jeweilige Schwenkwinkel der Scheinwerfer nur annähernd abhängig vom momentanen Kurvenradius. Da dieser keinerlei Zusammenhang mit dem weiteren Kurvenverlauf und die dann auftretenden Kurvenradien besitzt, ist die bekannte Beleuchtungsvorrichtung für den Einsatz in Fahrzeugen nicht geeignet und daher über ein Papierstadium nicht hinausgekommen.

Der Erfindung liegt die Aufgabe zugrunde, eine Beleuchtungsvorrichtung der eingangs genannten Art zu schaffen, die eine wirklichkeitsnahe Ausleuchtung von Straßen ermöglicht.

Die Erfindung löst diese Aufgabe durch die kennzeichnenden Merkmale des Patentanspruchs 1.

Im Gegensatz zu zwei synchron verschwenkten Front-Scheinwerfern ist es auch möglich, nur einen Scheinwerfer zu verschwenken und den anderen Scheinwerfer unverändert mit gerader Ausrichtung zu lassen. Der oder die verschwenkbaren Scheinwerfer werden bereits vor Beginn einer Kurve in der richtigen Weise verschwenkt. Damit ist es möglich, die Kurvenfahrt mit bereits verschwenktem (N) Scheinwerfer anzutreten. Entsprechend gilt dies während der Kurvenfahrt. Auch dort wird der weitere Verlauf der Kurve durch eine entsprechende, im voraus erfolgende Verschwenkung des (der) Scheinwerfer (s) erreicht. Die Genauigkeit der satellitengestützten (GPS) Information ist bereits heute in den meisten Fällen ausreichend, eine brauchbare Information über den aktuellen Standort des Fahrzeugs zu liefern. Mit zunehmender Genauigkeitsverbesserung dieser Information läßt sich die Ausrichtung des Scheinwerfers in Bezug auf den Straßenverlauf optimieren.

Auch soll im Rahmen der Erfindung die Möglichkeit bestehen, die Lichtverteilung der (des) Scheinwerfer (s) davon abhängig zu machen, ob es sich um eine Straße in der Stadt oder außerhalb geschlossener Städte oder aber um eine Autobahn handelt.

Vorteilhafte Ausgestaltungen der Erfindung sind Gegenstand der weiteren Patentansprüche.

So ist es beispielsweise möglich, das Steuergerät mit dem Ausgangssignal einer Navigationsvorrichtung zu versorgen. Da eine derartige Vorrichtung in aller Regel ohnehin vorhanden ist, handelt es sich bei der variablen Scheinwerferausrichtung um einen Zusatznutzen der Navigationsvorrichtung.

Entsprechend kann das Steuergerät in die Navigationsvorrichtung integriert sein. Eine derartige Einrichtung steuert dann einerseits eine Anzeige für die Navigation und zusätzlich einen Antrieb für die Änderung der Scheinwerferausrichtung.

Entsprechend dem Grundgedanken der Erfindung kann mit Hilfe des Steuergeräts auch die Höhenausrichtung entweder desselben Scheinwerfers, der kurvenverlaufsabhängig seitenverschwenkbar ist, oder eines anderen, nicht seitlich verschwenkbaren Scheinwerfers verändert werden.

Schließlich kann die Verschwenkung des Scheinwerfers sowohl in horizontaler als auch oder alternativ in vertikaler Richtung abhängig von der Fahrzeuggeschwindigkeit vorgenommen sein. Bei hoher Geschwindigkeit erfolgt die Verschwenkung in größerem Abstand vor Beginn einer Kurve als bei niedriger Geschwindigkeit. Es wird damit dem Fahrer die Möglichkeit gegeben, rechtzeitig sich auf den Verlauf der Straße einzustellen und sein Fahrverhalten diesem Verlauf anzupassen.

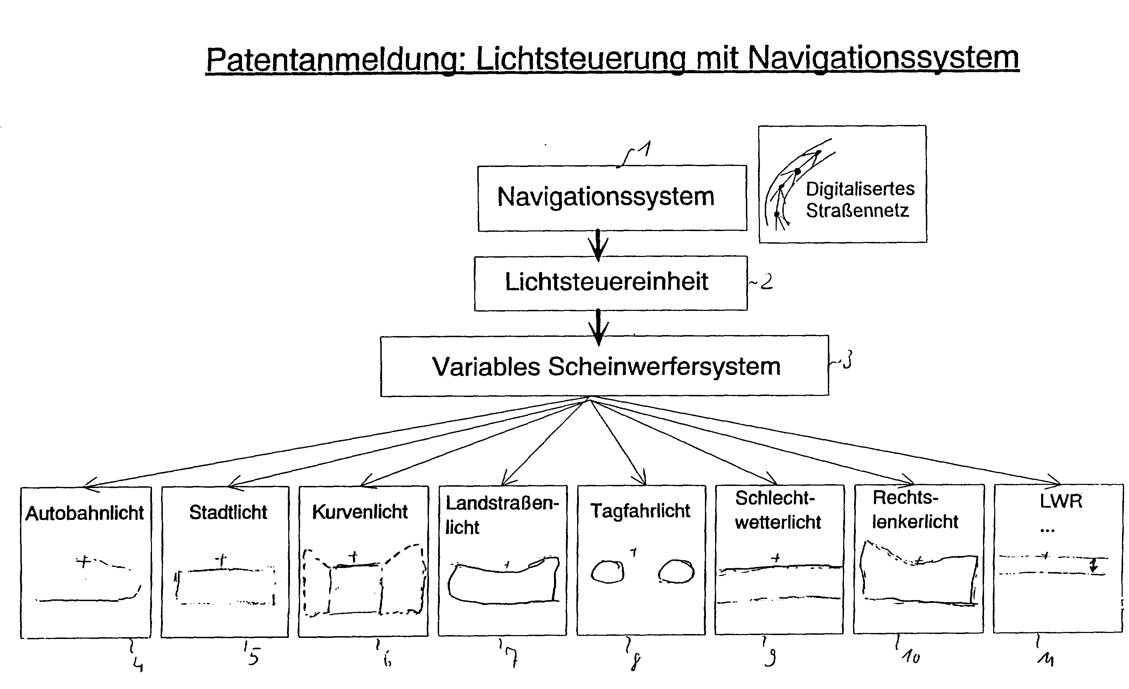

Anhand der Zeichnung ist die Erfindung weiter erläutert.

Die einzige Figur zeigt schematisch die Wirkungsweise der erfindungsgemäßen Beleuchtungsvorrichtung. Ein Navigationssystem 1 liefert Informationen über den aktuellen Standort des Fahrzeugs, die es aus Informationen von GPS-Satelliten erhält, an ein Steuergerät 2. Ferner besitzt das Navigationssystem 1 Informationen über den Verlauf und die örtliche Lage der Straße, auf der sich das Fahrzeug gerade befindet und gibt diese Informationen ebenfalls an das Steuergerät 2 weiter. Im Steuergerät 2 wird die notwendige bzw. optimale Lichtverteilung eines Scheinwerfersystems 3 berechnet und das System 3 entsprechend angesteuert. Das System 3 besteht aus mehreren einzelnen Scheinwerfermodulen mit jeweils einer Lichtquelle, einem Reflektor und ggf, einer Blende. Die Module (nicht dargestellt) werden entsprechend der berechneten Lichtverteilung angesteuert und erzeugen das schematisch anhand von einzelnen Beispielen dargestellte Licht, wie Autobahnlicht 4, Stadtlicht 5, Kurvenlicht 6, Landstraßenlicht 7, Tagfahrlicht 8, Schlechtwetterlicht 9, Rechtslenkerlicht 10 sowie eine Einstellung der Leuchtweite in Form einer Leuchtweitenregulierung 11. Die in den einzelnen Blöcken 4 bis 11 dargestellten Lichtverteilungen entsprechen dabei den auf einer Projektionsfläche im definierten Abstand erzeugten Lichtverteilungskurven.

Anstelle individueller und einzeln aktivierter Scheinwerfermodule können mehrere Lichtverteilungen, beispielsweise Stadtlicht 5 und Schlechtwetterlicht 9 auch durch eine entsprechende Bewegung einer Blende innerhalb eines einzigen Scheinwerfers erzeugt werden. Dadurch läßt sich die Zahl der erforderlichen Scheinwerfermodule reduzieren.

Auf diese Weise ist es möglich, die Scheinwerferbeleuchtung den tatsächlichen Gegebenheiten und Notwendigkeiten einer Fahrt anzupassen.

## Patentansprüche

1. Beleuchtungsvorrichtung für Fahrzeuge mit mindestens einem variabel ausrichtbaren Scheinwerfer (3) zur verbesserten Ausleuchtung von Straßen, dadurch gekennzeichnet, daß die Ausrichtung und/oder Lichtverteilung des Scheinwerfers durch ein Steuergerät (2) gesteuert ist, das eine satellitengestützte Information über den aktuellen Standort des Fahrzeugs, und eine Information über den Verlauf und/oder die örtliche Lage der Straße erhält.

2. Beleuchtungsvorrichtung nach Anspruch 1, dadurch gekennzeichnet, daß das Steuergerät das Ausgangssignal einer Navigationsvorrichtung (1) für den Standort des Fahrzeugs erhält.

3. Beleuchtungsvorrichtung nach Anspruch 2, dadurch gekennzeichnet, daß das Steuergerät und die Navigationsvorrichtung integriert sind.

4. Beleuchtungsvorrichtung nach einem der Ansprüche 1 bis 3, dadurch gekennzeichnet, daß das Steuergerät auch die Höhenausrichtung des Scheinwerfers steuert.

5. Beleuchtungsvorrichtung nach einem der Ansprüche 1 bis 4, dadurch gekennzeichnet, daß das Steuergerät auch die Aufspreizung des Scheinwerferlichts steuert.

## Claims

1. A lighting system for vehicles with at least one variable alignment headlamp (3) for improved illumination of roads, characterised in that the alignment and/or light distribution of the headlamp is controlled by a control unit (2), which receives satellite supported information on the current location of the vehicle and information on the course and/or position of the road.

2. A lighting system according to Claim 1, characterised in that the control unit receives the output signal of a navigation system (1) on the location of the vehicle.

3. A lighting system according to Claim 2, characterised in that the control unit and the navigation system are integrated.

4. A lighting system according to one of the Claims 1 to 3, characterised in that the control unit also controls the vertical alignment of the headlamp.

5. A lighting system according to one of the Claims 1 to 4, characterised in that the control unit also controls the scattering of the light from the headlamp.

## Revendications

1. Dispositif d'éclairage pour véhicules équipés d'au moins un projecteur (3) à orientation variable, afin d'améliorer l'éclairage des voies de circulation,
caractérisé en ce que
l'orientation et/ou la distribution de l'éclairage fourni par le projecteur sont commandés par un appareil (2), qui reçoit, fournies par des satellites, des informations concernant la position actuelle des véhicules et également le tracé et/ou la situation locale de la voie de circulation.

2. Dispositif d'éclairage selon la revendication 1,
caractérisé en ce que
l'appareil de commande reçoit d'un dispositif de navigation (1) le signal de sortie correspondant à la position du véhicule.

3. Dispositif d'éclairage selon la revendication 2,
caractérisé en ce que
l'appareil de commande est intégré au dispositif de navigation.

4. Dispositif d'éclairage selon l'une quelconque des revendications 1 à 3,
caractérisé en ce que
l'appareil de commande pilote également l'orientation en hauteur du projecteur.

5. Dispositif d'éclairage selon l'une quelconque des revendications 1 à 4,
caractérisé en ce que
l'appareil de commande pilote également l'étalement en largeur du faisceau lumineux du projecteur.
